# EUROPÄISCHE PATENTSCHRIFT

(11) **EP 0 851 004 B1**
(45) Veröffentlichungstag und Bekanntmachung des Hinweises auf die Patenterteilung: **11.04.2001**
(21) Anmeldenummer: 97121846.6
(22) Anmeldetag: 11.12.1997
(51) Int. Cl.: C09B 31/08

(54) **Disazofarbstoffe zum Färben von cellulosehaltigen Materialien**
Disazo dyestuffs for dyeing materials containing cellulose
Colorants disazoiques pour la teinture de fibres contenant de la cellulose

(30) Priorität: 24.12.1996 DE 19654430
(43) Veröffentlichungstag der Anmeldung: 01.07.1998
(73) Patentinhaber: BAYER AG, 51368 Leverkusen (DE)
(72) Erfinder: Mennicke, Winfried, Dr., 51375 Leverkusen (DE)

(56) Entgegenhaltungen:
- EP-A- 0 534 903
- EP-A- 0 735 106
- CH-A- 144 485
- DE-A- 2 449 206
- FR-A- 689 111

## Beschreibung

Die vorliegende Erfindung betrifft neue Disazofarbstoffe, ein Verfahren zu deren Herstellung, deren Lösungen, ein Verfahren zur Herstellung der Lösungen sowie deren Verwendung zum Färben und Bedrucken von polymeren Materialien, insbesondere von cellulosehaltigen Materialien.

In FR-A-689 111 werden Disazofarbstoffe beschrieben, die durch Umsetzung von 1-Amino-2-oxynaphthalinen und ihren Sulfonsäurederivaten erhalten werden. Die so hergestellten Farbstoffe können zum Färben von regenerierter Cellulose und Kunstseide verwendet werden.

CH-B-144 485 offenbart einen Disazofarbstoff, der erhalten wird durch 1) Umsetzung von diazotierter 1-Methyl-4-aminobenzol-3-sulfonsäure mit 1-Amino-2-methoxynaphthalin-6-sulfonsäure und 2) Diazotierung des Reaktionsproduktes aus 1) und Kupplung mit 2-Amino-5-oxynaphthalin-7-sulfonsäure.

In EP-A-534 903 wird ein Verfahren zum Färben von Papier beschrieben, wobei als Färbemittel Disazofarbstoffe eingesetzt werden.

Die neuen Disazofarbstoffe entsprechen der Formel 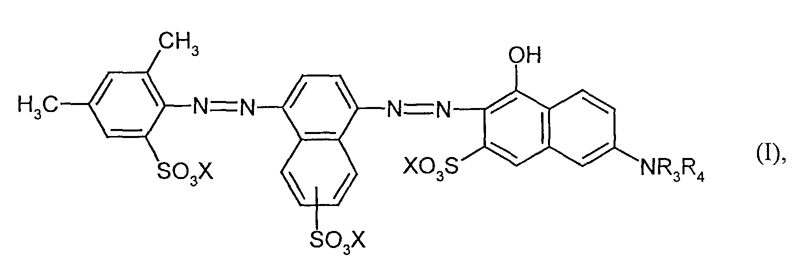 worin
- R₃: für Wasserstoff oder C₁-C₄-Alkyl,
- R₄: für Wasserstoff, C₁-C₄-Alkyl, gegebenenfalls substituiertes Phenyl oder Acyl,
- X: für ein Wasserstoff-, Alkali- oder Ammoniumion oder für das Kation eines organischen Amins steht.

Die Kationen X in Formel (I) können gleich oder verschieden sein, vorzugsweise sind sie gleich. Als Alkali-Ionen in der Bedeutung von X kommen vorzugsweise Lithium-, Natrium- und Kaliumionen in Frage, und als Kationen organischer Amine insbesondere die Mono-, Bis-, Tris-, Tetra-C₁-C₄-alkylammoniumionen, die Mono-, Bis-, und Tris-C₁-C₄-Alkanolammoniumionen und/oder deren Mischformen.

Unter gegebenenfalls substituiertem Phenyl in der Bedeutung von R₄ ist ein- oder mehrfach, vorzugsweise ein- bis vierfach gleich oder verschieden substituiertes Phenyl zu verstehen, wobei als Substituenten C₁-C₄-Alkyl, C₁-C₄-Alkoxy, Halogen, wie beispielsweise Chlor oder Brom, Sulfo, Carboxy, Hydroxy, Amino, mit C₁-C₄-Alkyl mono- oder disubstituiertes Amino, Acylamino, beispielsweise Formylamino, C₁-C₄-Alkanoylamino, Benzoylamino oder durch C₁-C₄-Alkyl, C₁-C₄-Alkoxy, Chlor oder Brom substituiertes Benzoylamino in Frage kommen.

Unter Acyl in der Bedeutung von R₄ ist beispielsweise Aminocarbonyl, Formyl, C₁-C₄-Alkanoyl, Benzoyl oder durch C₁-C₄-Alkyl, C₁-C₄-Alkoxy, Chlor oder Brom substituiertes Benzoyl zu verstehen.

Vorzugsweise steht
- X: für ein Kation der Formel 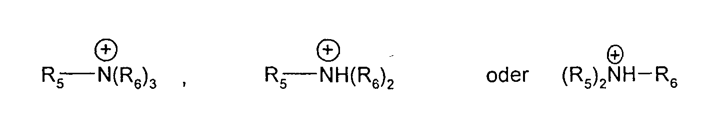
worin
- R₅: für Wasserstoff oder C₁-C₄-Alkyl steht, welches gegebenenfalls durch Hydroxy oder Hydroxy-C₁-C₄-alkoxy substituiert ist, insbesondere für CH₃, C₂H₅, CH₂-CH₂-CH₂-CH₃, CH₂-CH₂-OH, CH₂-CH(OH)-CH₃, CH₂-CH₂-OCH₂-CH₂-OH steht und
- R₆: für C₁-C₄-Hydroxyalkyl, C₁-C₄-Hydroxyalkoxy-C₁-C₄-alkyl oder Hydroxy-poly(C₁-C₄-alkoxy)-C₁-C₄-alkyl mit bis zu 6 C₁-C₄-Alkoxy-Einheiten, insbesondere für CH₂-CH₂-OH, CH₂-CH(OH)-CH₃, CH₂-CH₂-OCH₂-CH₂-OH oder 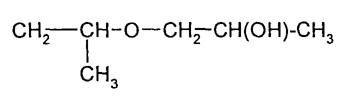 steht.

Die erfindungsgemäßen Farbstoffe der Formel I können erhalten werden, indem man die Aminobenzolsulfonsäuren der Formel (II) 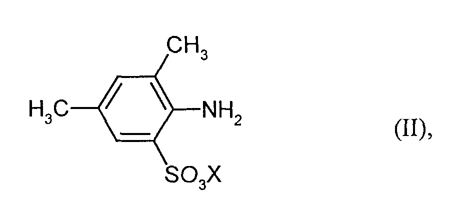 worin X die oben angegebene Bedeutung hat,
diazotiert und auf die Aminonaphthalinsulfonsäuren der Formel (III) 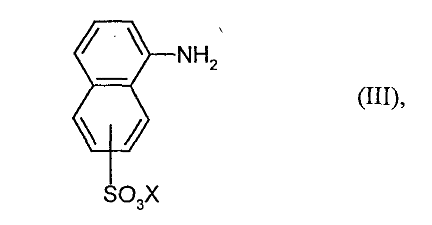 worin X die oben angegebene Bedeutung hat,
kuppelt, die dabei gebildeten Aminoazofarbstoffe der Formel (IV) 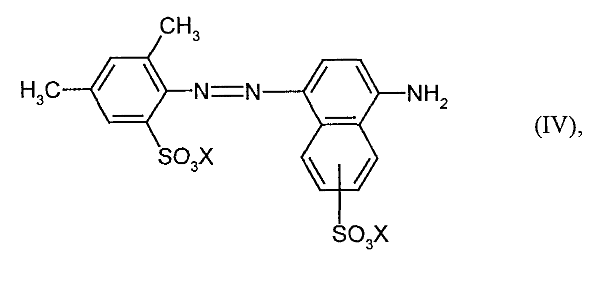 worin X die oben angebenen Bedeutung hat,
diazotiert und auf die Aminonaphtholsulfonsäuren der Formel (V) 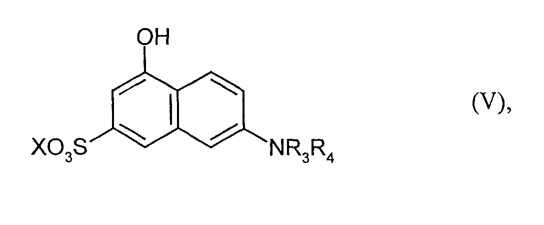 worin
R₃, R₄ und X die oben angegebene Bedeutung haben,
kuppelt.

Eine geeignete Aminobenzolsulfonsäure der Formel (II) (X = H) ist beispielsweise: 2-Amino-3,5-dimethylbenzolsufonsäure.

Als Aminonaphthalinsulfonsäuren der Formel (III) (X = H) kommen in Frage: 1-Aminonaphthalin-6- oder-7-sulfonsäure.

Als Beispiele für Aminonaphtholsulfonsäuren der Formel (V) (X = H) kommen in Frage:
1-Hydroxy-7-amino-, -7-methylamino-, -7-dimethylamino-, -7-phenylamino-, 7-(4-sulfophenylamino)-, -7-(3-sulfophenylamino)-, -7-(4-carboxyphenylamino)-, -7-(3-carboxyphenylamino)-, -7-(4-hydroxy-3-carboxyphenylamino)-, -7-(4-methylphenylamino)-, -7-(4-methoxyphenylamino)-, -7-(2-methoxyphenylamino)-,-7-(2,4-dimethoxyphenylamino)-, -7-(4-chlorphenylamino)-, -7-(4-aminophenylamino)-, -7-(4-amino-3-sulfophenylamino)-, -7-(4-benzoylaminophenylamino)-, 7-(4-benzoylamino-3-sulfophenylamino)-, -7-(4,4'-methylbenzoylaminophenylamino)-, -7-ureido-, -7-acetamino-, -7-benzoylamino- und -7-(4-methylbenzoylamino)-naphthalin-3-sulfonsäure.

Die Diazotierung der Aminobenzolsulfonsäuren der Formel (II) und der intermediär gebildeten Aminoazofarbstoffe der Formel (IV) erfolgt in an sich bekannter Weise, beispielsweise mit einem Alkalimetallnitrit wie Natriumnitrit in mineralsaurem Medium, vorzugsweise in einem salzsauren Medium, bei Temperaturen von 0 - 30°C, vorzugsweise 0 -15°C. Die Kupplung der diazotierten Aminobenzolsulfonsäuren der Formel (II) mit einer Aminonaphthalinsulfonsäure der Formel (III) und die Kupplung der diazotierten Aminoazofarbstoffe der Formel (IV) mit einer Aminonaphtholsulfonsäure der Formel (V) erfolgt ebenfalls unter üblichen bekannten Bedingungen. Die Kupplungsreaktion wird vorzugsweise in wäßrigem Medium bei schwach saurem, neutralem oder alkalischem pH-Wert und Temperaturen von 0 -30° C, vorzugsweise 10 -25° C durchgeführt, wobei sich bei der Kupplungsreaktion mit den Aminonaphthalinsulfonsäuren der Formel (IV) ein neutraler bis schwach saurer pH-Wert, vorzugsweise im Bereich von 7 bis 4, und bei der Kupplungsreaktion mit den Aminonaphtholsulfonsäuren der Formel (VI) ein neutraler bis schwach alkalischer pH-Wert, vorzugsweise im Bereich von 7,5 bis 9, als vorteilhaft erweist. Der gewünschte pH-Wert kann durch Zusatz von Basen, beispielsweise von Alkalimetallhydroxiden, -carbonaten oder -acetaten, wie Lithium-, Natrium- oder Kaliumhydroxid, -carbonat oder -acetat, Ammoniak, Ammoniumhydroxiden der Formel (VII), oder organischen Aminen, beispielsweise den Aminen der Formel (VII) bis (IX) 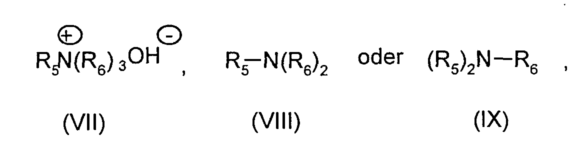 worin R₅ und R₆ die oben angegebene Bedeutung haben,
eingestellt und gehalten werden.

Die so hergestellten erfindungsgemäßen Farbstoffe können durch Aussalzen mit Alkalisalzen, Sprühtrocknen oder Eindampfen auf der Walze isoliert und mit den üblichen Stell- und Hilfsmitteln zu wasserlöslichen Präparationen verarbeitet werden. Sie können auch mit und ohne vorangehende Isolierung zu wäßrigen konzentrierten und stabilen Lösungen aufbereitet werden, indem man ihre wäßrigen Lösungen oder Suspensionen einem Membrantrennverfahren, inbesondere einer Druckpermeation, unterwirft und damit von Elektrolyten und niedermolaren Nebenprodukten befreit.

Die Aufarbeitung der erfindungsgemäßen Farbstoffe zu stabilen Lösungen gelingt auch nach dem Verfahren der DOS 2 449 206. Das Prinzip dieses Verfahrens besteht in einer zweimaligen Umsalzung. Demnnach werden die Natriumsalze der erfindungsgemäßen Farbstoffe mit mindestens der den Sulfogruppen äquivalenten Menge an Calciumionen in die schwerlöslichen Calciumsalze (A) überführt. Die Calciumsalze (A) werden abgetrennt und anschließend in wäßriger Suspension durch Verrühren mit Sulfaten des Lithiums, Ammoniums oder der Kationen 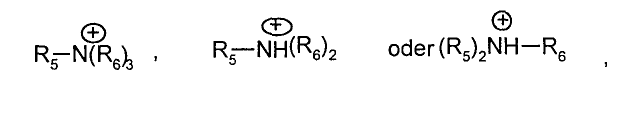 worin R₅ und R₆ die oben angegebene Bedeutung haben,
oder durch Verrühren mit Schwefelsäure und basischen Lithiumsalzen, Ammoniak, den Ammoniumhydroxiden der Formel (VII) oder den Aminen der Formel (VIII) oder (IX) in leichtlösliche Lithium- oder Ammoniumsalze (B) und in schwerlösliches Calciumsulfat umgewandelt. Durch Filtration des ausgefallenen Calciumsulfates gelangt man schließlich zur gewünschten Lösung der Farbstoffsalze (B).

Es wurde gefunden, daß im Falle der erfindungsgemäßen Farbstoffe die Umwandlung von schwerlöslichem (A) in leichtlösliches (B) besonders glatt verläuft, wenn man bezogen auf den Calciumgehalt von (A) einen 0,5- bis 2-fachen, vorzugsweise 0,6- bis 1,2-fachen, Überschuß an Sulfationen, sei es in Form von Lithiumsulfat oder eines der oben erwähnten Ammoniumsulfate oder in Form von Schwefelsäure, verwendet.

Die Lösungen von (B) sind dann besonders gut löslich und in einer Konzentration von 10-25 Gew.-% über mehrere Wochen stabil, wenn man zu ihrer Herstellung Schwefelsäure und ein Amin der Formel (VIII) oder (IX), vorzugsweise in einem molaren Überschuß von bis zu 100 % gegenüber Schwefelsäure, insbesondere 12,5-75 %, verwendet. Besonders gut geeignete Amine der Formeln (VIII) und (IX) sind beispielsweise: Methyldiethanolamin, Ethyldiethanolamin, Butyldiethanolamin, Methyldiisopropanolamin, N,N-Dimethylethanolamin, N,N-Diethylethanolamin, 2-(2-Dimethylaminoethoxy)ethanol, 2-(2-Diethylaminoethoxy)ethanol, 2-(2-Diethylaminoethoxyethoxy)ethanol.

Die Lösungen der erfindungsgemäßen Farbstoffe können noch zusätzlich wasserlösliche organische Lösungsvermittler enthalten, beispielsweise Harnstoff, N,N'-Dimethylharnstoff, 6-Caprolactam, Methylpyrrolidon, N-Methylpyrrolidon, Dimethylsulfoxid, mehrwertige Alkohole und deren C₁-C₄-Monoalkylether, wie Ethylenglykol, Propylenglykol, Glycerin, Ethylglykol oder 1-Ethoxy-2-propanol, und Alkanolamine, wie Ethanolamin oder die Amine der Formel (VII). Die flüssigen Farbstoffpräparationen sind vorzugsweise frei von organischen Lösungsvermittlern und enthalten im allgemeinen 5 bis 40 Gew.-%, vorzugsweise 10 bis 25 Gew.%, von mindestens einem erfindungsgemäßen Farbstoff der Formel (I).

Ein weiterer Gegenstand der Erfindung ist die Verwendung der Disazofarbstoffe der Formel (I) zum Färben und Bedrucken von polymeren Materialien, insbesondere carbonamidgruppen- und cellulosehaltige Materialien, wie Leder, Baumwolle, Celluloseregenerat-Fasern und Papier.

Die Farbstoffe (I) können von ihren Eigenschaften her als substantive oder Direktfarbstoffe angesehen werden und lassen sich daher nach allen in der Leder-, Textil- und Papierindustrie für substantive Farbstoffe gebräuchlichen Verfahren anwenden.

In sowohl fester als auch flüssiger Präparation eignen sich die Farbstoffe (I) vor allem zur Herstellung von in der Masse sowie an der Oberfläche gefärbten Papieren, wobei geleimte und ungeleimte Papiersorten in Frage kommen, welche von gebleichtem und ungebleichtem Zellstoff unterschiedlicher Provenienz, wie Nadel-oder Laubholz-sulfit- oder -sulfat-Zellstoff herrühren können. Zum Färben von Papier in der Masse werden die Farbstoffe (I) der Papierpulpe vor der Blattbildung zugesetzt. Dies kann entweder beim Dickstoff nach dem Aufschlagen der Cellulose oder beim Dünnstoff vor dem Auflaufen auf der Papiermaschine geschehen. Zum Färben von in der Masse geleimten Papier werden die Farbstoffe (I) vorzugsweise vor dem Leimungsmittel dem Dünnstoff zugesetzt. Zum Färben von Papier in der Oberfläche werden sie vorzugsweise in einer konzentrierten Stärkelösung aufgelöst und in dieser Form mittels einer Leimpresse auf das Papier aufgebracht. Die Farbstoffe (I) können auch beim Tauchfärben von Papier eingesetzt werden.

Die erfindungsgemäßen Farbstoffe der Formel (I) geben auf den oben genannten Materialien vorzugsweise auf Papier rotviolette bis blaue brillante Färbungen mit guten Naß- und Lichtechtheiten. Die gefärbten Papiere weisen eine gute Bleichbarkeit auf. Sie sind alaun- und weitgehend pH-unempfindlich und sind nicht nur gegenüber Wasser, sondern auch gegen Milch, Fruchtsäfte und alkoholische Getränke beständig.

### Beispiel 1

23,36 g 85,9 %ige 2-Amino-3,5-dimethyl-benzolsulfonsäure werden in 250 ml 65 °C heißem Wasser gelöst. Die Lösung wird mit 23 ml 4,35 N Natriumnitritlösung versetzt und innerhalb von 20 Minuten auf ein Gemisch von 120 ml Wasser, 70 g Eis und 28 ml 10 N Salzsäure ausgetragen, wobei die Temperatur durch gelegentlichen Zusatz von Eis unter 20 °C gehalten wird. Die Diazotierungsreaktion ist 30 Minuten später beendet. 25,8 g 86,4 %ige 1-Aminonaphthalin-7-sulfonsäure werden mit ca. 10 ml 10 N Natronlauge gelöst und mit 54,4 g Na-Acetat·3H₂O versetzt. In die sich einstellende Suspension pumpt man im Verlauf von einer Stunde die Suspension der Diazotierung zu und hält die Temperatur dabei ebenfalls unter 20°C. Nach ca. 12 Stunden, wenn die Kupplungsreaktion beendet ist, saugt man den Monoazofarbstoff der Formel 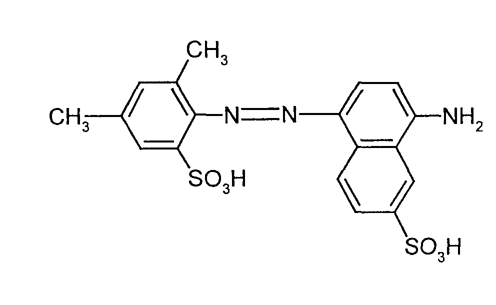 ab. Die dabei erhaltene Paste wird zur weiteren Bearbeitung in 300 ml Wasser angerührt und nach Zugabe von 16 ml 10 N Salzsäure mit 21 ml 4,35 N Natriumnitrilösung bei pH < 2,5 diazotiert. Die so hergestellte Diazosuspension wird anschließend in gleichmäßigem Fluß auf ein Gemisch von 28,7 g 98,9 %ige 1-Hydroxy-7-phenylamino-naphthalin-3-sulfonsäure, 150 ml Wasser, 9 ml 10 N Natronlauge und 16 g NaHCO₃ gepumpt. Man rührt noch eine Stunde bei pH 7 - 8 nach und saugt den Farbstoff der Formel 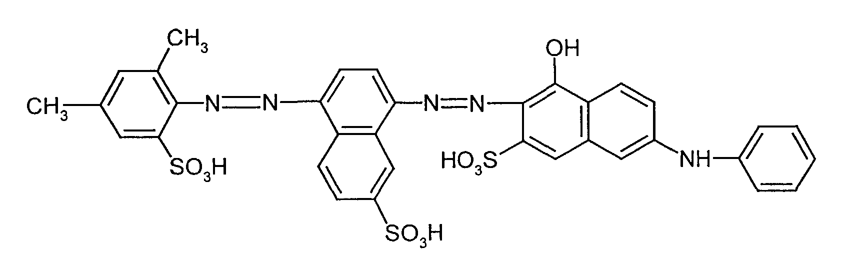 ab. Er stellt in getrocknetem Zustand ein schwarzes Pulver dar, welches Baumwolle und Papier in violetten Nuancen mit guten Allgemeinechtheiten färbt.

### Beispiel 2

Verwendet man anstelle der 25,8 g 86,4 %ige 1-Aminonaphthalin-7-sulfonsäure des Beispiels 1 27,1 g 82,4 %ige 1-Aminonaphthalin-6-sulfonsäure und verfährt sonst, wie in Beispiel 1 beschrieben, so erhält man den Farbstoff der Formel 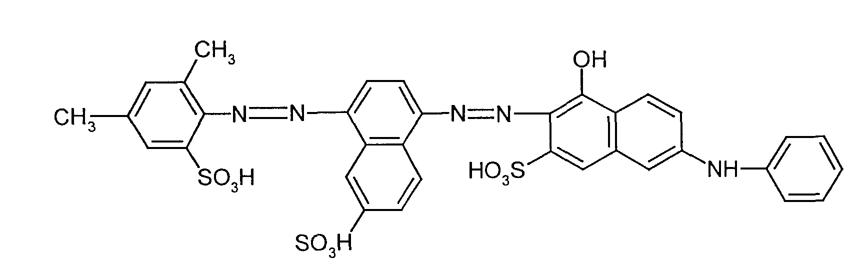 der ebenfalls Baumwolle und Papier in violetten Tönen färbt.

Zur Herstellung einer Lösung werden 307,5 g der feuchten Paste mit einem Farbstoffgehalt von 24,75 % (MG 761) zusammen mit 19,4g Calciumchlorid 10 Stunden lang in 800 ml Wasser verrührt. Man saugt anschließend ab und erhält 205g Preßkuchen, der 0,16 Mol Calciumionen enthält. Der Preßkuchen wird wiederum in 440ml Wasser angeschlagen und nach Zusatz von 92,7 g 6-Caprolactam, 62,7 g 50 Gew.-%ige Schwefelsäure und 57,2 g N-Methyldiethanolamin 5 Stunden lang verrührt. Nach Abtrennen des ausgefallenen Calciumsulfates gelangt man zu einer mehrere Wochen lang stabilen konzentrierten Farbstofflösung.

### Beispiele 16 bis 43

In analoger Weise zu Beispiel 1 wurden die in den folgenden Tabellen 1 und 2 angegebenen Disazofarbstoffe hergestellt:

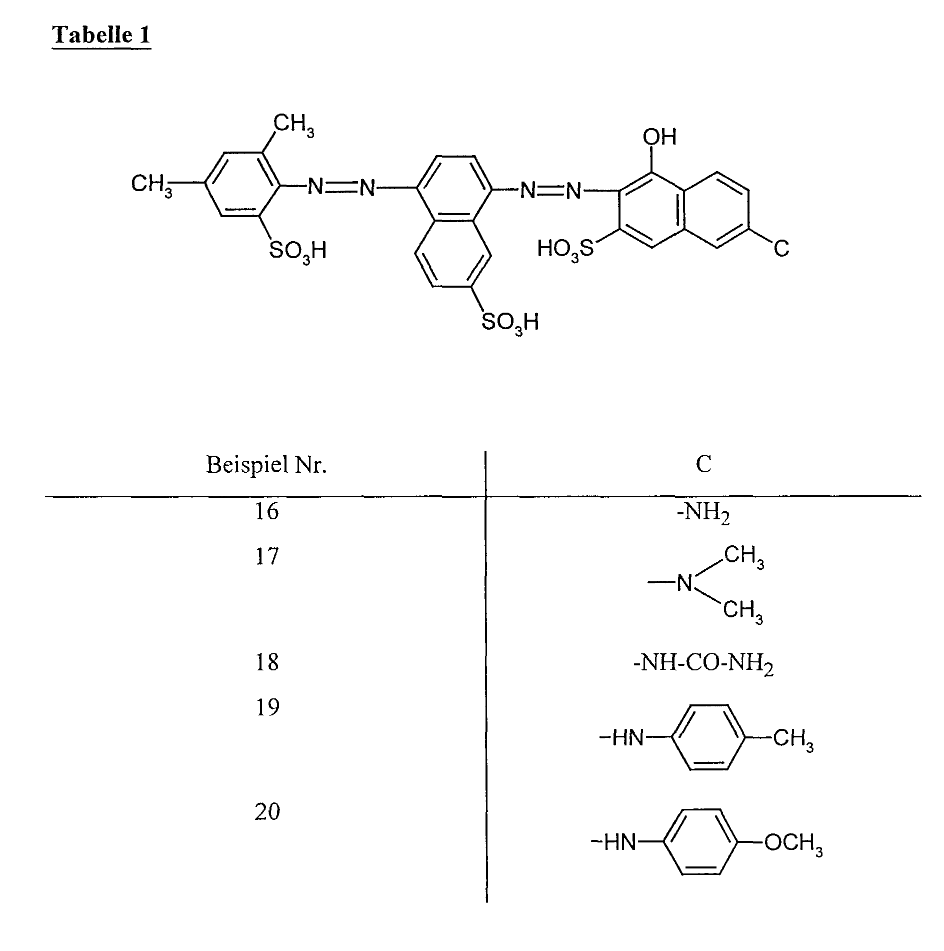

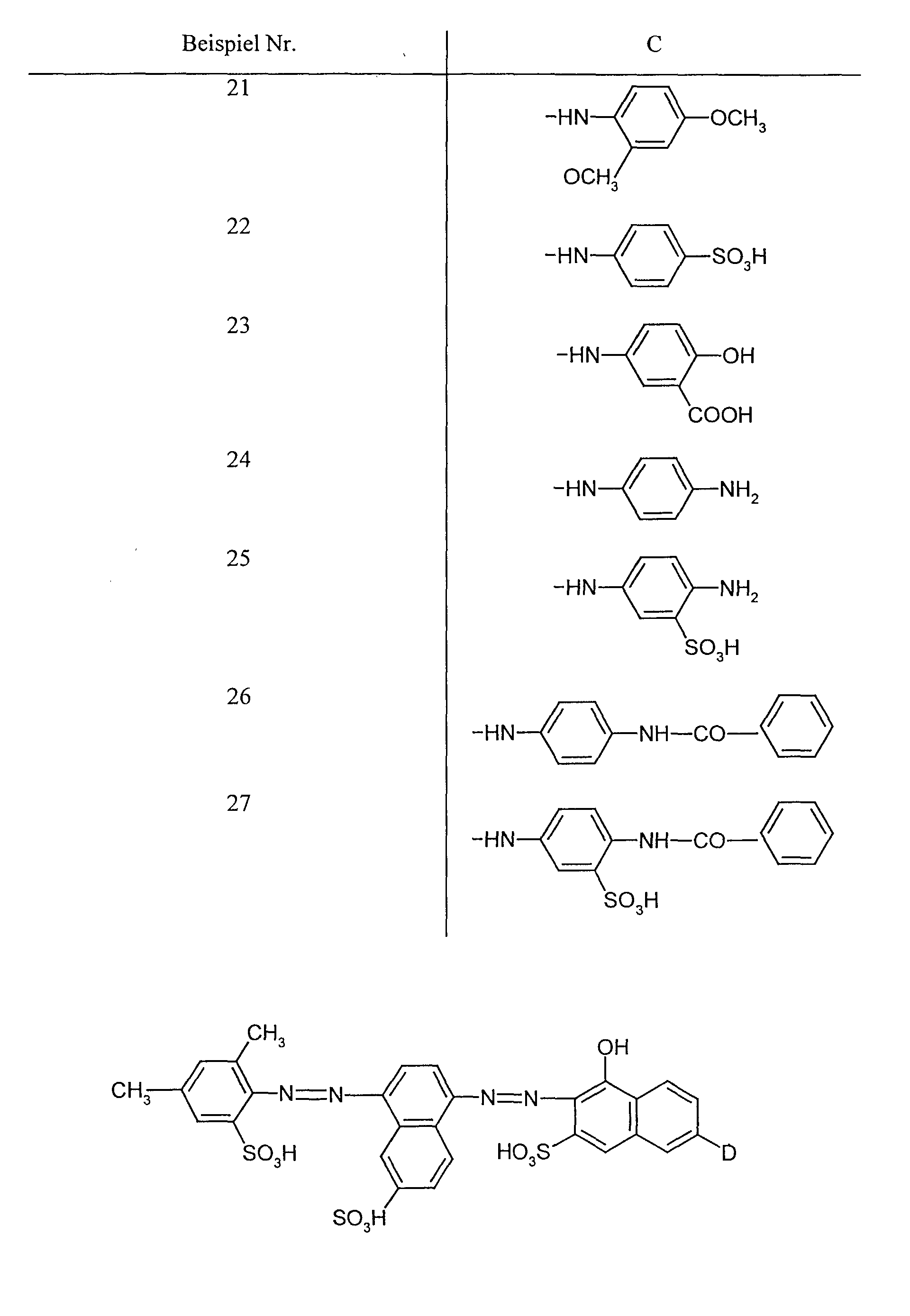

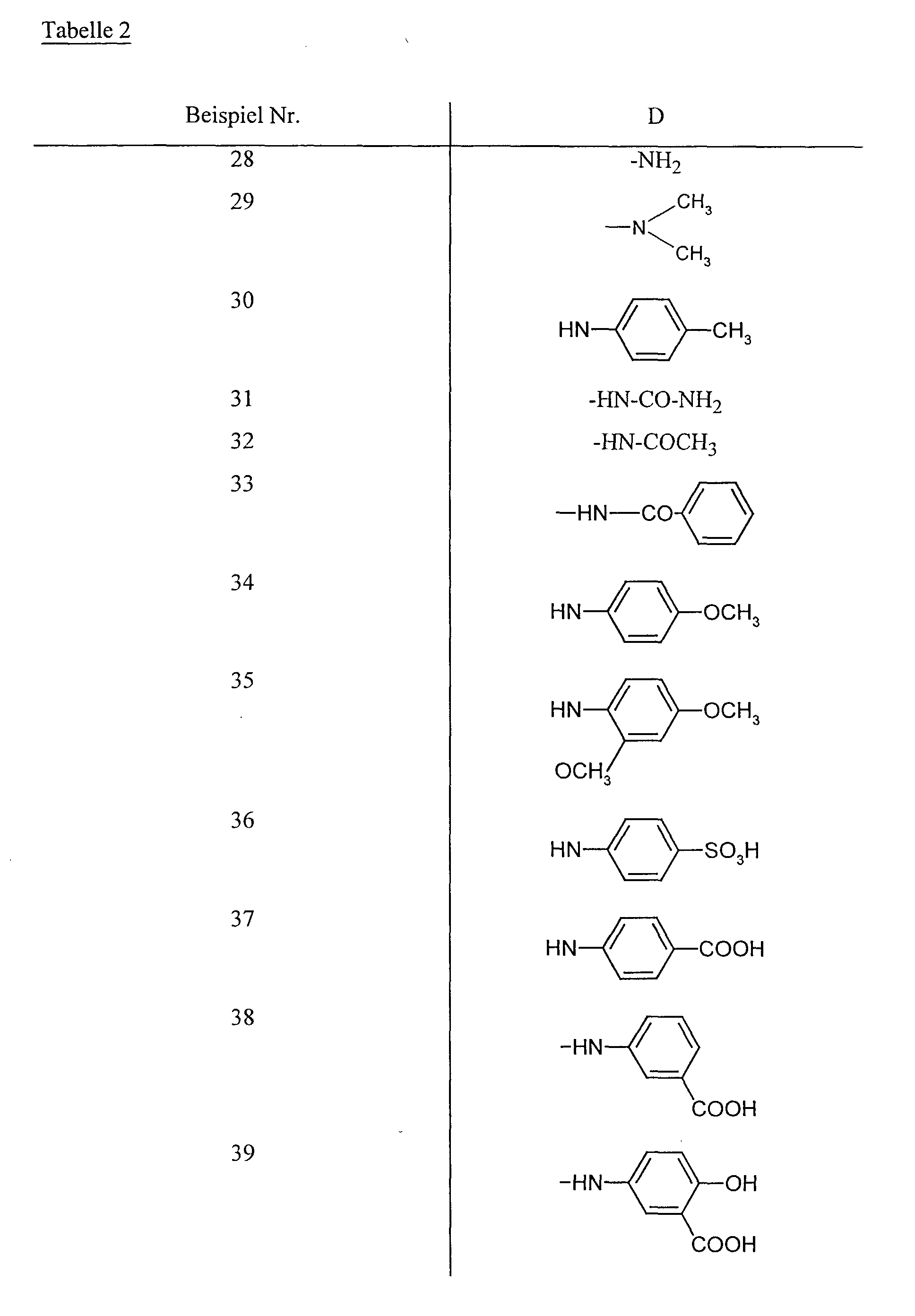

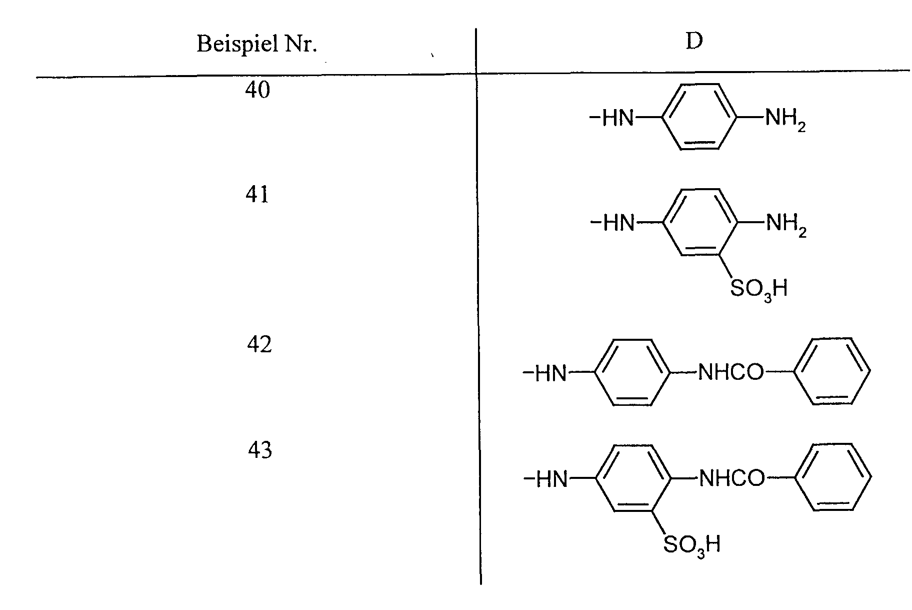

### Färbebeispiel 1

In einem Bad aus 250 ml Wasser, 0,2 g Soda, 4g Natriumsulfat und 0,15 g des gemäß Beispiel 1 hergestellten Farbstoffes trägt man bei 40 °C 10 g Baumwollgarn ein. Man erhöht die Temperatur der Färbeflotte unter ständiger Bewegung des Garnes auf 95°C und färbt 45 Minuten bei dieser Temperatur, bis die Restflotte nur noch schwach gefärbt ist. Das gefärbte Garn wird anschließend ausgewrungen, mit kaltem Wasser ausgespült und bei 60 °C getrocknet. Es ist tiefviolett gefärbt und zeichnet sich durch eine gute Wasch- und Schweißechtheit aus.

### Färbebeispiel 2

800 kg gebleichte Sulfatcellulose und 200 kg gebleichte Sulfitcellulose werden in einem Pulper mit 14 cbm Fabrikationswasser 30 Minuten lang bis zur Stippenfreiheit aufgeschlagen. Die Pulpe wird anschließend in eine Ableerbütte überführt, mit Stoffmühlen auf einen Mahlgrad von 25 ° SR (nach Schopper-Riegler) gemahlen und gelangt schließlich in eine Mischbütte, wo noch 250 kg Kaolin Ia, 1 % Farbstoff des Beispiels 2 als wäßrige Lösung von 20 g/l, und nach einer Aufziehzeit von 15 Minuten noch 2 % Harzleim sowie 10 Minuten später 4 % Alaun zugesetzt werden. Der %-Gehalt von Farbstoff, Harzleim und Alaun bezieht sich jeweils auf die absolut trockene Faser. Der pH des Gemisches beträgt 5,3. Die Zellstoffsuspension wird anschließend nach einem in der Industrie üblichem Verfahren auf einer Papiermaschine zu Papier verarbeitet. Man erhält ein intensiv violett gefärbtes Druckpapier mit guter Beständigkeit gegenüber Sodalösung, Essigsäure, Wasser und Alkohol. Das Abwasser ist praktisch farblos.

### Färbebeipiel 3

1000 kg gebleichte Sulfatcellulose werden wie unter Färbebeispiel 2 angegeben aufgeschlagen und gemahlen. In der Mischbütte erfolgt der Zusatz von 1 % eines Fixiermittels und 1 % Farbstoff des Beispiel 2 in Form einer wäßrigen Lösung von 20 g/l. Nach 15 Minuten Aufziehzeit wird die Cellulose zu Papier verarbeitet. Man erhält ein violett gefärbtes Tissue mit sehr guten Echtheiten gegenüber Sodalösung, Essigsäure, Wasser und Alkohol.

## Patentansprüche

1. Disazofarbstoffe der Formel 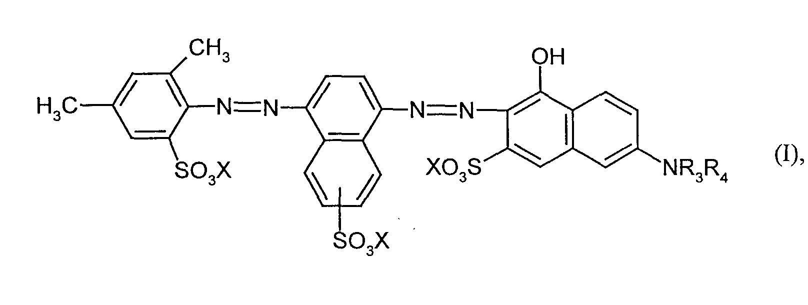 worin
R₃ für Wasserstoff oder C₁-C₄-Alkyl,
R₄ für Wasserstoff, C₁-C₄-Alkyl, gegebenenfalls substituiertes Phenyl oder Acyl,
X für ein Wasserstoff-, Alkali- oder Ammoniumion oder für das Kation eines organischen Amins steht.

2. Verfahren zur Herstellung von Farbstoffen gemäß Anspruch 1, indem man die Aminobenzolsulfonsäuren der Formel (II) 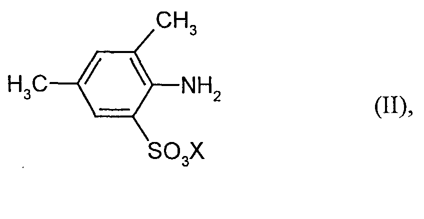 worin X die in Anspruch 1 angegebene Bedeutung hat,
diazotiert und auf die Aminonaphthalinsulfonsäuren der Formel (III) 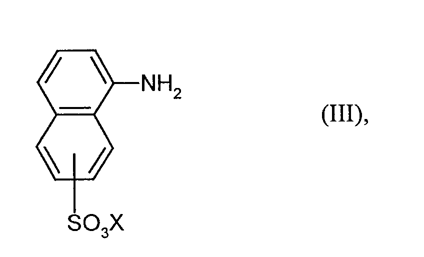 worin X die in Anspruch 1 angegebene Bedeutung hat,
kuppelt, die dabei gebildeten Aminoazofarbstoffe der Formel (IV) 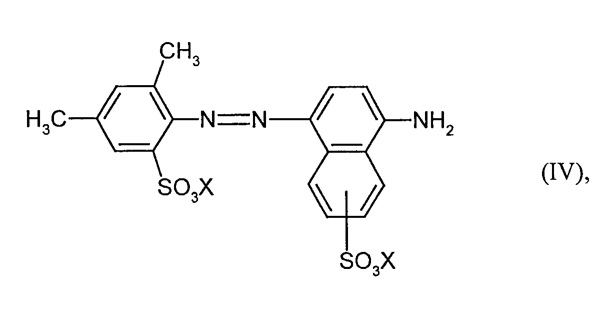 worin X die in Anspruch 1 angebene Bedeutung hat,
diazotiert und auf die Aminonaphtholsulfonsäuren der Formel (V) 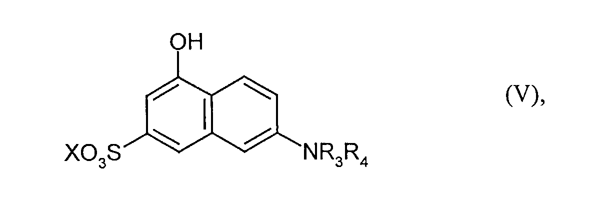 worin
R₃, R₄ und X die in Anspruch 1 angegebene Bedeutung haben,
kuppelt.

3. Wäßrige Farbstofflösungen enthaltend mindestens einen Farbstoff der Formel (I) des Anspruchs 1, worin
X gleich oder verschieden ist und für ein Lithium-, Ammoniumion oder für ein Kation der Formel 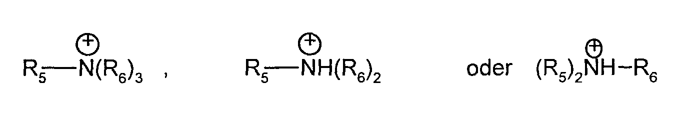
worin
R₅ für Wasserstoff oder C₁-C₄-Alkyl steht, welches gegebenenfalls durch Hydroxy oder Hydroxy-C₁-C₄-alkoxy substituiert ist, insbesondere für CH₃, C₂H₅, CH₂-CH₂-CH₂-CH₃, CH₂-CH₂-OH, CH₂-CH(OH)-CH₃, CH₂-CH₂-OCH₂-CH₂-OH steht und
R₆ für C₁-C₄-Hydroxyalkyl, C₁-C₄-Hydroxyalkoxy-C₁-C₄-alkyl oder Hydroxy-poly(C₁-C₄-alkoxy)-C₁-C₄-alkyl mit bis zu 6 C₁-C₄-Alkoxy-Einheiten, insbesondere für CH₂-CH₂-OH, CH₂-CH(OH)-CH₃, CH₂-CH₂-OCH₂-CH₂-OH oder 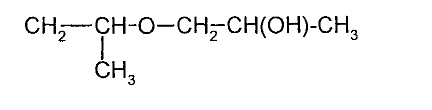 steht.

4. Wäßrige Farbstofflösungen gemäß Anspruch 3, worin
X gleich oder verschieden ist und für ein Kation der Formel 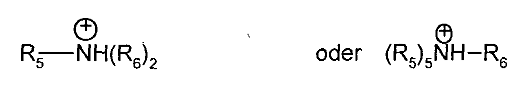 worin
R₅ und R₆ die in Anspruch 3 angegebene Bedeutung haben,
steht.

5. Wäßrige Farbstofflösungen gemäß den Ansprüchen 3 und 4, mit einem Farbstoffgehalt von 5 bis 40 Gew.-%.

6. Verfahren zur Herstellung der Farbstofflösungen gemäß Ansprüchen 3 bis 5, dadurch gekennzeichnet, daß mindestens ein Farbstoff der Formel (I) gemäß Anspruch 1, worin X für ein Natriumion steht, mit mindestens der den Sulfogruppen äquivalenten Menge an Calciumionen in den schwerlöslichen Farbstoff (I) mit X = 1/2 Ca²⁺ überführt wird, dieser abgetrennt und anschließend durch Verrühren in Wasser mit
a) einem, bezogen auf die Calciumionen, 0,5- bis 2-fachen, vorzugsweise 0,6- bis 1,2-fachen, Überschuß eines Sulfats des Lithiums, Ammoniums und/oder der Kationen 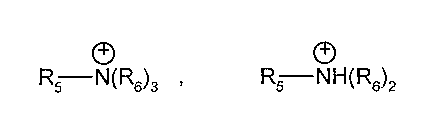 oder 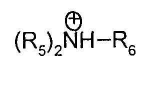 worin
R₅ und R₆ die in Anspruch 3 angegebene Bedeutung haben,
oder
b) einem, bezogen auf die Calciumionen, 0,5- bis 2-fachen, vorzugsweise 0,6- bis 1,2-fachen Überschuß an Schwefelsäure und/oder der zu Schwefelsäure mindestens äquivalenten Menge eines basischen Lithiumsalzes, Ammoniak und/oder den Ammoniumhydroxiden der Formel
R₅-N⁺(R₆)₃⁻OH
worin
R₅ und R₆ die in Anspruch 3 angegebene Bedeutung haben,
und/oder einem über die äquivalente Menge an Schwefelsäure bis zu 100%, vorzugsweise 12,5-75% hinausgehenden Überschuß eines Amins der Formeln
R₅-N(R₆)₂ und/oder (R₅)₂N-R₆
worin
R₅ und R₆ die in Anspruch 3 angegebene Bedeutung haben,
umgesalzen wird, und von der so erhaltenen Farbstofflösung das ausgefallene Calciumsulfat durch Filtration abgetrennt wird.

7. Verwendung von Farbstoffen gemäß Anspruch 1 zum Färben und Bedrucken von carbonamid gruppenhaltigen oder cellulosehaltigen Materialien.

8. Verwendung von Farbstoffen gemäß Anspruch 1 zum Färben von Papier oder Leder.

9. Verwendung der Farbstofflösungen gemäß Ansprüchen 3 bis 5 zum Färben von Papier in der Masse oder in der Oberfläche.

## Claims

1. Disazo dyestuff of the formula 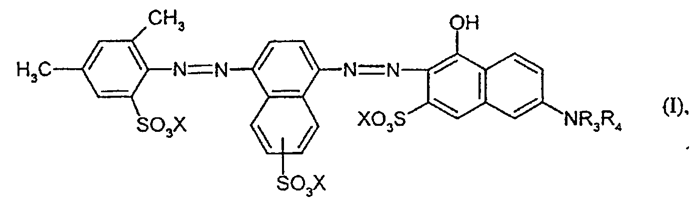 in which
R₃ represents hydrogen or C₁-C₄-alkyl,
R₄ represents hydrogen, C₁-C₄-alkyl, optionally substituted phenyl or acyl,
X represents a hydrogen, alkali metal or ammonium ion or represents the cation of an organic amine.

2. Process for the preparation of a dyestuff according to Claim 1, by diazotizing an aminobenzenesulphonic acid of the formula (II) 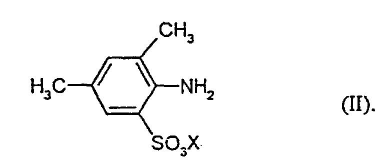 in which X has the meaning given in Claim 1,
and coupling the diazotization product to an aminonaphthalenesulphonic acid of the formula (III) 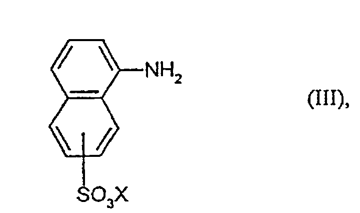 in which X has the meaning given in Claim 1,
diazotizing the aminoazo dyestuff formed in this reaction, of the formula (IV) 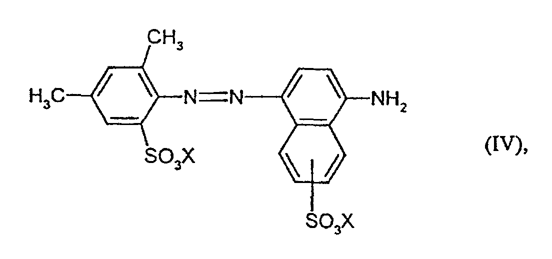 in which X has the meaning given in Claim 1,
and coupling the diazotization product to an aminonaphtholsulphonic acid of the formula (V) 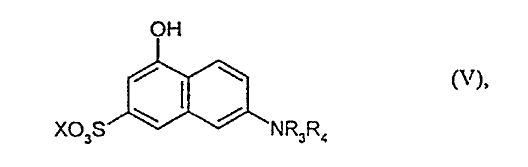 in which
R₃, R₄ and X have the meaning given in Claim 1.

3. Aqueous dyestuff solution comprising at least one dyestuff of the formula (I) of Claim 1, in which
X is identical or different and represents a lithium or ammonium ion or represents a cation of the formula 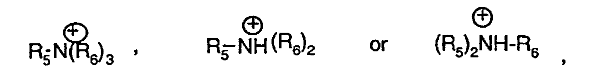
in which
R₅ represents hydrogen or C₁-C₄-alkyl which is optionally substituted by hydroxyl or hydroxy-C₁-C₄-alkoxy, in particular represents CH₃, C₂H₅, CH₂-CH₂-CH₂-CH₃, CH₂-CH₂-OH, CH₂-CH(OH)-CH₃ or CH₂-CH₂-OCH₂-CH₂-OH and
R₆ represents C₁-C₄-hydroxyalkyl, C₁-C₄-hydroxyalkoxy-C₁-C₄-alkyl or hydroxy-poly(C₁-C₄-alkoxy)-C₁-C₄-alkyl having up to 6 C₁-C₄-alkoxy units, in particular represents CH₂-CH₂-OH, CH₂-CH(OH)-CH₃, CH₂-CH₂-OCH₂-CH₂-OH or

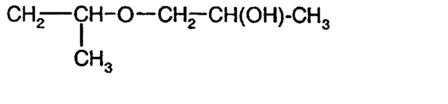

4. Aqueous dyestuff solution according to Claim 3, in which
X is identical or different and represents a cation of the formula 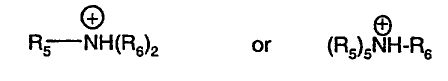
in which
R₅ and R₆ have the meaning given in Claim 3.

5. Aqueous dyestuff solution according to Claims 3 and 4, having a dyestuff content of 5 to 40% by weight.

6. Process for the preparation of a dyestuff solution according to Claims 3 to 5, characterized in that at least one dyestuff of the formula (I) according to Claim 1, in which X represents a sodium ion, is converted with an amount of calcium ions at least equivalent to the sulpho groups into the sparingly soluble dyestuff (I) where X = 1/2 Ca²⁺, this dyestuff is separated off and then a salt-to-salt conversion is carried out by stirring in water with
a) a 0.5- to 2-fold, preferably 0.6- to 1.2-fold excess, based on the calcium ions, of a sulphate of lithium, of ammonium and/or of the cations 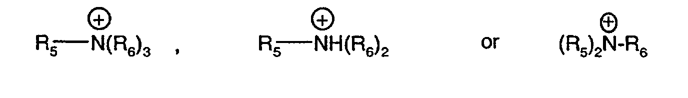 in which
R₅ and R₆ have the meaning given in Claim 3,
or
b) a 0.5- to 2-fold, preferably 0.6- to 1.2-fold excess, based on the calcium ions, of sulphuric acid and/or an amount of a basic lithium salt, ammonia and/or the ammonium hydroxides of the formula
R₅-N⁺(R₆)₃⁻OH
in which
R₅ and R₆ have the meaning given in Claim 3,
and/or a 100%, preferably 12.5 to 75% excess, beyond the equivalent amount of sulphuric acid, of an amine of the formulae
R₅-N(R₆)₂ and/or (R₅)₂N-R₆
in which
R₅ and R₆ have the meaning given in Claim 3,
and the calcium sulphate which has precipitated out from the dyestuff solution thus obtained is separated off, by filtration.

7. Use of a dyestuff according to Claim 1 for dyeing and printing materials containing carboxamide groups or cellulosic materials.

8. Use of a dyestuff according to Claim 1 for dyeing paper or leather.

9. Use of a dyestuff solution according to Claims 3 to 5 for dyeing paper in the pulp or in the surface.

## Revendications

1. Colorants disazoïques de formule 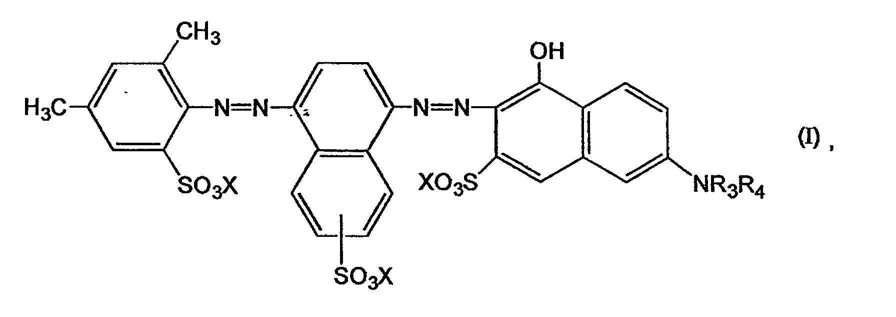 dans laquelle
R₃ représente l'hydrogène ou un groupe alkyle en C₁-C₄,
R₄ représente l'hydrogène, un groupe alkyle en C₁-C₄, un groupe phényle ou acyle éventuellement substitué,
X représente l'hydrogène, un ion de métal alcalin ou d'ammonium ou le cation d'une amine organique.

2. Procédé de préparation des colorants selon la revendication 1, dans lequel on effectue
la diazotation des acides aminobenzènesulfoniques de formule (II) 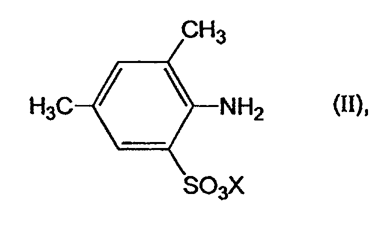 dans laquelle X a la signification donnée dans la revendication 1, et le couplage sur les acides aminonaphtalènesulfoniques de formule (III), 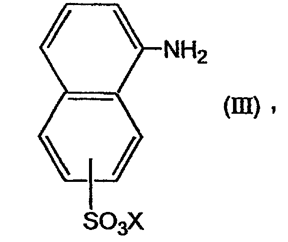 dans laquelle X a la signification donnée dans la revendication 1, la diazotation des colorants aminoazoïques de formule (IV) ainsi formés 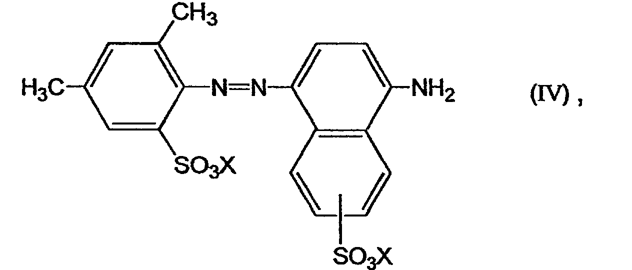 dans laquelle X a la signification donnée dans la revendication 1, et le couplage sur les acides aminonaphtalènesulfoniques de formule (V) 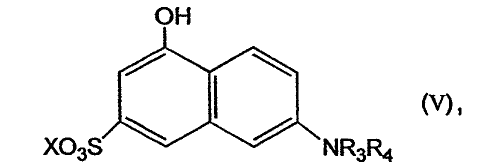 dans laquelle R₃, R₄ et X ont la signification donnée dans la revendication 1.

3. Solutions aqueuses de colorant contenant au moins un colorant de formule (I) selon la revendication 1, dans laquelle
X est identique ou différent et représente un ion lithium, ammonium ou un cation de formule 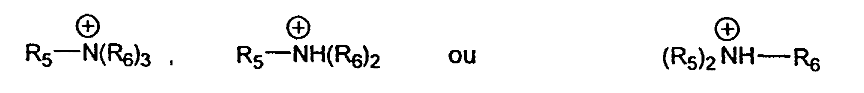 dans laquelle
R₅ est l'hydrogène ou un groupe alkyle en C₁-C₄, qui est éventuellement substitué par un groupe hydroxy ou hydroxyalcoxy en C₁-C₄, en particulier un groupe CH₃, C₂H₅, CH₂-CH₂-CH₂-CH₃, CH₂-CH₂-OH, CH₂-CH(OH)-CH₃, CH₂-CH₂-OCH₂-CH₂-OH et
R₆ est un groupe hydroxyalkyle en C₁-C₄, hydroxyalcoxy en C₁-C₄-alkyle en C₁-C₄, ou hydroxy-poly(alcoxy en C₁-C₄)-alkyle en C₁-C₄ avec jusqu'à 6 unités alcoxy en C₁-C₄, en particulier CH₂-CH₂-OH, CH₂-CH(OH)-CH₃, CH₂-CH₂-OCH₂-CH₂-OH ou

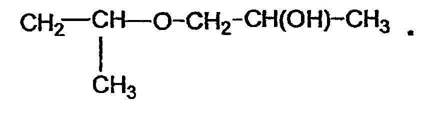

4. Solutions aqueuses de colorant selon la revendication 3, dans lesquelles
X est identique ou différent et représente un cation de formule 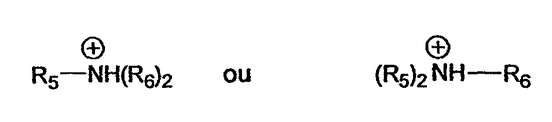 dans laquelle R₅ et R₆ ont la signification donnée dans la revendication 3.

5. Solutions aqueuses de colorant selon les revendications 3 et 4, avec une teneur en colorant de 5 à 40% en poids.

6. Procédé de préparation des solutions de colorant selon les revendications 3 à 5, caractérisé en ce qu'on transforme au moins un colorant de formule (I) selon la revendication 1, dans laquelle X représente un ion sodium, avec au moins une quantité d'ions calcium équivalente aux groupes sulfo en un colorant difficilement soluble (I) avec X = 1/2 Ca²⁺, on sépare celui-ci et finalement on change la nature du sel par agitation dans l'eau avec
a) un excès de 0,5 à 2 fois, de préférence 0,6 à 1,2 fois, par rapport aux ions calcium, d'un sulfate de lithium, d'ammonium et/ou des cations 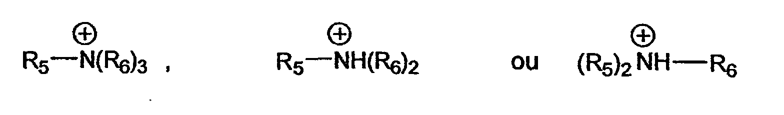 formules dans lesquelles R₅ et R₆ ont la signification donnée dans la revendication 3,
ou
b) un excès de 0,5 à 2 fois, de préférence 0,6 à 1,2 fois, par rapport aux ions calcium, d'acide sulfurique et/ou des quantités au moins équivalentes à l'acide sulfurique d'un sel de lithium basique, d'ammoniac et/ou d'un hydroxyde d'ammonium de formule
R₅-N⁺(R₆)₃⁻OH
dans laquelle R₅ et R₆ ont la signification donnée dans la revendication 3,
et/ou un excès jusqu'à 100%, de préférence 12,5 à 75%, par rapport à la quantité équivalente d'acide sulfurique, d'une amine de formules
R₅-N(R₆)₂ et/ou (R₅)₂N-R₆
dans lesquelles R₅ et R₆ ont la signification donnée dans la revendication 3, et on sépare par filtration de la solution de colorant ainsi obtenue le sulfate de calcium qui a précipité.

7. Utilisation des colorants selon la revendication 1 pour teindre et imprimer des matières contenant des groupes carboxamides ou contenant de la cellulose.

8. Utilisation de colorants selon la revendication 1 pour la coloration du papier ou la teinture du cuir.

9. Utilisation de colorants selon les revendications 3 à 5 pour la coloration du papier en masse ou en surface.
